(19) Europäisches Patentamt
European Patent Office
Office européen des brevets

(11) **EP 2 478 632 B1**

(12) **EUROPEAN PATENT SPECIFICATION**

(45) Date of publication and mention
of the grant of the patent:
**19.07.2017 Bulletin 2017/29**

(51) Int Cl.:
*H02M 7/483* [(2007.01)]

(21) Application number: **09783032.7**

(22) Date of filing: **15.09.2009**

(86) International application number:
**PCT/EP2009/061949**

(87) International publication number:
**WO 2011/032581 (24.03.2011 Gazette 2011/12)**

(54) **ADDITION OF A THIRD HARMONIC COMPONENT TO A BASIC REFERENCE WAVEFORM**

ZUGABE EINER DRITTEN HARMONISCHEN KOMPONENTE ZU EINER BASISREFERENZWELLENFORM

AJOUT D'UN TROISIÈME COMPOSANT HARMONIQUE À UNE FORME D'ONDE BASIQUE DE RÉFÉRENCE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**25.07.2012 Bulletin 2012/30**

(73) Proprietor: **ABB Research Ltd.**
**8050 Zürich (CH)**

(72) Inventors:
• **JONSSON, Tomas, U**
**S-723 55 Västerås (SE)**
• **HÄRNEFORS, Lennart**
**S-632 26 Eskilstuna (SE)**

(74) Representative: **Ahrengart, Kenneth**
**ABB AB**
**Intellectual Property**
**Forskargränd 7**
**721 78 Västerås (SE)**

(56) References cited:
**WO-A2-2006/130452**

• **STEFFEN ROHNER ET AL: "Pulse width modulation scheme for the Modular Multilevel Converter" POWER ELECTRONICS AND APPLICATIONS, 2009. EPE '09. 13TH EUROPEAN CONFERENCE ON, IEEE, PISCATAWAY, NJ, USA, 8 September 2009 (2009-09-08), pages 1-10, XP031541780 ISBN: 978-1-4244-4432-8**
• **AHMADI D ET AL: "Full Study of a Precise and Practical Harmonic Elimination Method for Multilevel Inverters" APPLIED POWER ELECTRONICS CONFERENCE AND EXPOSITION, 2009. APEC 2009. TWENTY-FOURTH ANNUAL IEEE, IEEE, PISCATAWAY, NJ, USA, 15 February 2009 (2009-02-15), pages 871-876, XP031442785 ISBN: 978-1-4244-2811-3**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF INVENTION

The present invention generally relates to voltage source converters. More particularly the present invention relates to a method, control device and computer program product for controlling a cell based voltage source converter using a basic reference waveform to which at least one odd harmonic component has been added as well as to such a voltage source converter.

BACKGROUND

There exist different types of voltage source converters, where one type that has become of interest lately is the cell based voltage source converter. One cell based voltage source converter that is of interest is a so-called multilevel voltage source converter. This converter is for instance described in DE 10103031.

It is in many voltage source converter applications of interest to add an odd harmonic component, like a zero sequence third harmonic component to a basic reference waveform used for controlling the converter. This has the effect of reducing the peak value of a modulation reference used, which in turn allows an increase of the modulation range, i.e. of the converter output voltage. In many applications, the addition of zero-sequence harmonics is not harmful, since the Y point in a three-phase circuit is often not grounded (as in AC motors) or the converter is connected to a utility grid via a Y-$\Delta$ connected transformer.

JP 2008193770 does for instance describe a three-phase AC motor being controlled using PWM regulation. A symmetrical $3^{rd}$ harmonic is added to the PWM control, where the phase of this third harmonic is adjusted based on a phase lag.

WO 01/03490 describes an apparatus for increasing the voltage utilization of three-phase rectifier systems with connection between output centre point and artificial mains star point. Here a third harmonic is added with defined amplitude and phase position.

US 6058031 describes a multi level high power motor drive converter and control system. Switch positions are selected using feed-forward sine-triangle modulation with third harmonic injection.

US 2006/0279249 describes third-harmonic injection in a variable frequency drive including a plurality of power cells. The paper "Pulse width modulation scheme for the Modular Multilevel Converter" (Steffen Rohner et al, ISBN: 978-1-4244-4432-8) discloses a method for controlling a cell based voltage source converter using a basic reference waveform to which at least one odd harmonic component has been added.

For an ordinary two-level voltage-source converter, the addition of a odd harmonic component is straightforward and uncomplicated.

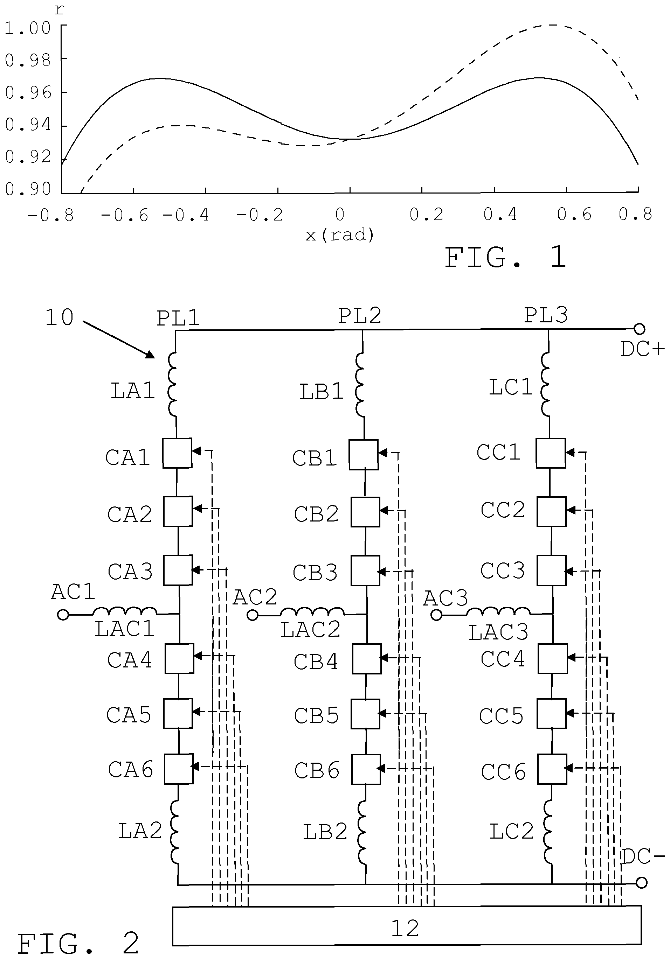

However, for the cell based voltage source converter there are some problems with adding such odd harmonics. Because of cell voltage ripples the resulting modulation reference peak will not be sufficiently decreased when adding harmonics in a conventional way. This can be seen in fig. 1, which shows the modulation reference r in relation to a reference waveform angle x for negligible and non-negligible cell-voltage ripples with third harmonic addition. In fig. 1 the modulation reference for negligible cell-voltage ripples is shown as a solid curve, while the modulation reference for non-negligible cell-voltage ripples is shown with a dashed curve. As can be seen the conventional adding of third harmonics leads to an unsymmetrical modulation reference when there is a non-negligible cell voltage ripple and therefore the adding of third harmonics does not lead to as good a lowering of the peaks in the reference waveform as when there is negligible cell voltage ripple.

There is therefore a need for improvement in this field of technology.

SUMMARY OF THE INVENTION

The present invention is directed towards controlling a cell based voltage source converter using a basic reference waveform to which at least one odd harmonic component has been added for obtaining an improved modulation range.

One object of the present invention is to provide a method for controlling a cell based voltage source converter using a basic reference waveform to which at least one odd harmonic component has been added, which method provides an improved modulation range.

This object is according to a first aspect of the present invention achieved through a method for controlling a cell based voltage source converter using a basic reference waveform to which at least one odd harmonic component has been added and comprising the steps of:

- determining an adjustment factor for at least one harmonic component to be added to said basic reference waveform based on operational data of the voltage source converter,
- determining the at least one odd harmonic component,
- adding the odd harmonic component to the basic reference waveform shifted in phase with said adjustment factor, and
- controlling the voltage source converter using the basic reference waveform with added harmonic component.

Another object of the present invention is to provide a control device for controlling a cell based voltage source converter using a basic reference waveform to which at least one odd harmonic component has been added, which control device provides an improved modulation range.

This object is according to a second aspect of the present invention achieved through a control device for controlling a cell based voltage source converter using a basic reference waveform to which at least one odd harmonic component has been added, said control device comprising

an adjustment factor determining unit configured to determine an adjustment factor for at least one harmonic component to be added to the basic reference waveform based on operational data of the voltage source converter, and

a control unit configured to determine the at least one odd harmonic component, add the odd harmonic component to the basic reference waveform shifted in phase with the adjustment factor and control the voltage source converter using the basic reference waveform with added harmonic component.

Another object of the present invention is to provide a voltage source converter, which provides an improved modulation range.

This object is according to a third aspect of the present invention achieved through a voltage source converter comprising:

- at least two branches, where each branch includes a number of voltage source converter cells, each having at least one switching unit in parallel with an energy storage element, and

- a control device comprising

  - an adjustment factor determining unit configured to determine an adjustment factor for at least one harmonic component to be added to a basic reference waveform based on operational data of the voltage source converter, and

  - a control unit configured to determine the at least one odd harmonic component, add the odd harmonic component to the basic reference waveform shifted in phase with the adjustment factor and control the voltage source converter using the basic reference waveform with added harmonic component.

Another object of the present invention is to provide a computer program product for controlling a cell based voltage source converter using a basic reference waveform to which at least one odd harmonic component has been added, which computer program product provides an improved modulation range.

This object is according to a third aspect of the present invention achieved through computer program product for controlling a cell based voltage source converter using a basic reference waveform to which at least one odd harmonic component has been added,

the computer program being loadable into a control device of or for the voltage source converter and comprising computer program code means to make the control device, when said program is loaded in the control device,

- determine an adjustment factor for at least one harmonic component to be added to the basic reference waveform based on operational data of the voltage source converter,
- determine the at least one odd harmonic component,
- add the odd harmonic component to the basic reference waveform shifted in phase with the adjustment factor, and
- control the voltage source converter using the basic reference waveform with added harmonic component.

The present invention has a number of advantages. It provides a modulation reference that is more symmetrical for a cell based voltage source converter. This improves the modulation range and allows a raising of the AC output voltage and thus a more efficient use of the voltage source converter.

The operational data may with advantage include the output power from the voltage source converter, which may be the active output power and/or the reactive output power.

The adjustment factor may with advantage be proportional to the output power with a constant set by other voltage source converter operational data, which other voltage source converter operational data may include cell specifying data like number of cells and cell capacitance. The other voltage source converter operational data may also include a modulation index as well as data specifying the basic reference waveform like the amplitude of the basic reference waveform.

The odd harmonic component may be provided with the opposite polarity in relation to the polarity of the basic reference waveform. It may also have an amplitude that is a fraction of 1/6 or less of the amplitude of the basic reference waveform.

BRIEF DESCRIPTION OF THE DRAWINGS

The present invention will in the following be described with reference being made to the accompanying drawings, where

fig. 1 shows a diagram of the modulation reference in relation to the angle of a basic reference waveform with conventional third-harmonic addition when there is negligible and non-negligible cell-voltage ripple,
fig. 2 schematically shows a first type of cell based voltage source converter,
fig. 3 schematically shows the structure of a first type of voltage source converter cell,
fig. 4 schematically shows the structure of a second type of voltage source converter cell,
fig. 5 shows a block schematic of a control device for controlling a cell based voltage source converter,
fig. 6 schematically shows a flow chart including a number of method steps in a method for controlling a cell based voltage source converter,
fig. 7A and B schematically show diagrams of the modulation reference in relation to basic reference waveform angle for a cell based voltage source converter with and without phase adjustment of an added third harmonic component when there is only a resistive load,
fig. 8A and B schematically show diagrams of the modulation reference in relation to basic reference waveform angle for a cell based voltage source converter with and without phase adjustment of an added third harmonic component when there is a resistive and a reactive load, and
fig. 9 schematically shows a second type of cell based voltage source converter.

DETAILED DESCRIPTION OF THE INVENTION

The present invention is directed towards the adding of odd harmonics to a basic reference waveform used to control a cell based voltage source converter. This basic reference waveform may with advantage be sinusoidal.

In the following, a detailed description of preferred embodiments of the invention will be given.

Fig. 2 shows a block schematic outlining an example of a first type of cell based voltage source converter 10 that is a multilevel voltage source converter. The voltage source converter 10 here includes a group of branches that in this type of converter are in the form of phase legs connected in parallel between two DC terminals DC+ and DC- for connection to Direct Current (DC) equipment. In the example given here there are three such branches or phase legs PL1, PL2, PL3 in order to enable connection to three-phase Alternating Current (AC) equipment. It should however be realized that as an alternative there may be for instance only two phase legs. Each phase leg PL1, PL2, PL3 has a first and second end point. In a converter of the type depicted in fig. 2 the first end points of all the phase legs PL1, PL2 and PL3 are connected to a first DC terminal DC+ while the second end points are connected to a second DC terminal DC-. Each phase leg includes a lower and upper phase leg half. An upper half is normally termed a positive arm, while a lower half is termed a negative arm. At the junction where the positive and negative arms of a leg meet, a three-phase connection point AC1, AC2 and AC3 is provided. Each three-phase connection point AC1, AC2, AC3 is here connected to the corresponding phase leg via a respective inductor LAC1, LAC2, LAC3. Here each arm furthermore includes one current limiting inductor LA1, LA2, LB1, LB2, LC1 and LC2 connected to the corresponding DC connection point DC+ and DC-.

The voltage source converter 12 is realized through voltage source converter cells being connected to each other in series in the phase legs. In the present example there are three cells in each arm. Thus the positive arm of the first phase leg PL1 includes three cells CA1, CA2 and CA3, while the negative arm of the first phase leg PL1 includes three cells CA4, CA5 and CA6. In a similar fashion the positive arm of the second phase leg PL2 includes three cells CB1, CB2 and CB3, while the negative arm of the second phase leg PL2 includes three cells CB4, CB5 and CB6. Finally the positive arm of the third phase leg PL3 includes three cells CC1, CC2 and CC3, while the negative arm of the third phase leg PL3 includes three cells CC4, CC5 and CC6. The numbers are here only chosen for exemplifying the principles of the present invention.

A typical structure of the cells will shortly be described. The cells are each controlled to provide a voltage contribution to the AC terminals as well as to provide a DC potential at the DC terminals through a control device 12. This control performed by the control device 12 is in fig. 1 indicated through dashed arrows. The control device 12 thus controls the cells for converting AC power to DC power or vice versa.

The exemplifying converter 12 may here be operated in two power directions. The control typically involves generating control signals by the control device 12 in known fashion based on PWM modulation, for instance using a triangular sawtooth wave as a reference signal, and supplying these control signals to the cells CA1, CA2, CA3, CA4, CA5, CA6, CB1, CB2, CB3, CB4, CB5, CB6, CC1, CC2, CC3, CC4, CC5 and CC6.

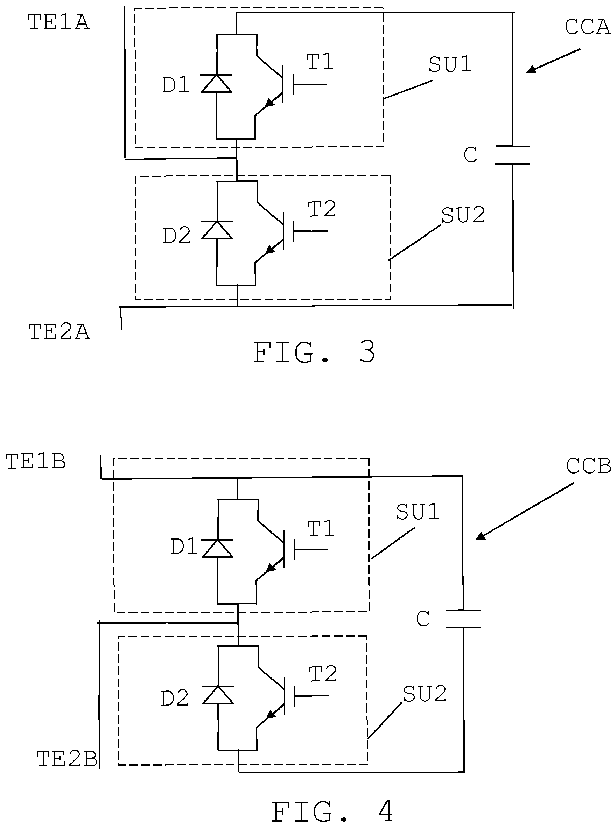

Fig. 3 schematically shows a first type of converter cell CCA that may be used in the cell based voltage source converter. The cell CCA is a half-bridge converter cell and includes an energy storage element, here in the form of a capacitor C, which is connected in parallel with a first group of switching units. The switching units in the first group are connected in series with each other. The first group here includes two switching units SU1 and SU2 (shown as dashed boxes), where each switching unit SU1, SU2 may be realized in the form of a primary switching element that may be an Insulated Gate Bipolar Transistor (IGBT) together with an anti-parallel secondary rectifying element, which secondary rectifying element is typically a diode. In fig. 3 a first switching unit SU1 includes a switching element in the form of a first transistor T1 and a first rectifying element D1 in the form of a diode oriented upwards in the figure, which is towards the capacitor C, and connected in parallel between emitter and collector of the transistor T1. There is also a second switching unit SU2 connected in series with the first switching unit SU1 and having a rectifying element, here a second diode D2, with the same orientation as the first diode and connected in parallel with a second switching element, here a second transistor T2.

The cell has a first connection terminal TE1A and a second connection terminal TE2A, each providing a connection for the cell to a phase leg of the voltage source converter. In this first type of cell the first connection terminal TE1A more particularly provides a connection from the phase leg to the junction between the first and the second switching units SU1 and SU2, while the second connection terminal TE2A provides a connection from the phase leg to the junction between the second switching unit SU2 and the capacitor C. These connection terminals TE1A and TE2A thus provide points where the cell can be connected to a phase leg. The connection of the first connection terminal TE1A thus joins a phase leg with the connection point or junction between two of the series connected switching units of the first group, here the first and second switching units SU1 and SU2, while the connection of the second connection terminal TE2A joins the phase leg with a connection point between the first group of series connected switching units and the energy storage element, which is here the connection point between the second switching unit SU2 and the capacitor C.

Through connecting a suitable number of such cells in cascade or series with each other in the phase legs a voltage source converter is obtained. A positive arm of a phase leg as shown in fig. 2 may for instance be obtained through connecting a first connection terminal of a first cell to the first DC terminal via an inductor, connecting a first connection terminal of a second cell to the second connection terminal of the first cell and connecting a first connection terminal of a third cell to the second connection terminal of the second cell. A negative arm of the phase leg may then be obtained through connecting a first connection terminal of a fourth cell to the second connection terminal of the third cell, connecting a first connection terminal of a fifth cell to the second connection terminal of the fourth cell, connecting a first connection terminal of a sixth cell to the second connection terminal of the fifth cell and connecting the second terminal of the sixth cell to the second DC terminal via an inductor.

Fig. 4 schematically shows a second type of half-bridge converter cell CCB having the same type of components as the first type and being interconnected in the same way. There is also in this second type of cell CCB a connection terminal, a second connection terminal TE2B, which provides a connection between the branch and the connection point between the first and the second switching units SU1 and SU2. However as opposed to the first type of cell, a first connection terminal TE1B here provides a connection between the branch and the junction between the first switching unit SU1 and the capacitor C. These are just some examples on cells. It should be realized that it may be possible with even simpler cells. Each cell may be provided as one switching unit in parallel with an energy storage element. It is also possible with more complex cells, such as full bridge cells.

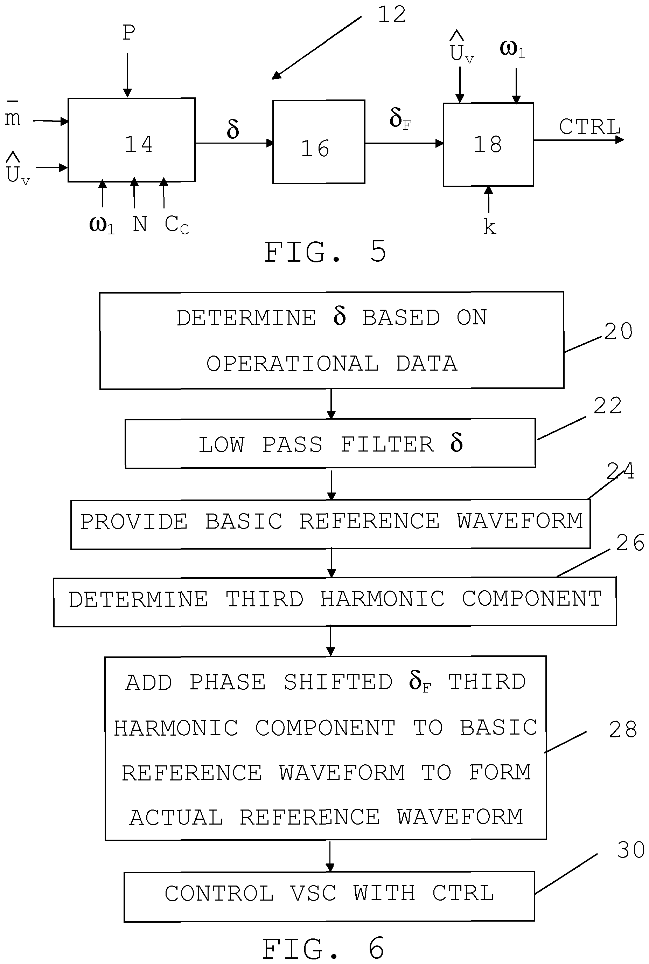

Fig. 5 shows a block schematic of a control device 12 according to the principles of the present invention. The control device 12 includes an adjustment factor determining unit 14 that receives measured signals in the form of output power which in one embodiment of the invention is output effective power P, i.e. effective power output by the voltage source converter, fundamental system constants in the form of basic reference waveform angular frequency $\omega_1$, i.e. AC system angular frequency, number N of cells in each arm of the phase legs and cell capacitance $C_c$, i.e. the capacitance of the capacitors in fig. 3 and 4 This unit 14 also receives internally generated signals including a modulation index $\overline{m}$ and basic reference waveform amplitude $\hat{U}_v$ that may be the amplitude of the AC voltage provided at the AC terminals of the voltage source converter. The adjustment factor determining unit 14 generates an adjustment factor $\delta$ that is delivered to a low pass filter 16, which low pass filter in turn generates a low pass filtered adjustment factor $\delta_F$ that is supplied to a control unit 18. The control unit 18 also receives the basic reference waveform amplitude $\hat{U}_v$ and angular frequency $\omega_1$ and an odd harmonic relative amplitude k. The relative amplitude is formed as a fraction of the basic reference waveform amplitude. The control unit 18 implements a PWM (Pulse Width Modulation) controller that generates a control signal CTRL that is used for controlling the voltage source converter.

The functioning of the invention will now be described in more detail.

As mentioned earlier it is of interest to add an odd harmonic component to the basic reference waveform in order for the converter to produce an output signal on the AC side resembling the basic reference waveform with added harmonic component. The basic reference waveform is with advantage sinusoidal. The addition has the effect of reducing the peak value of a modulation reference, thereby allowing an increase of the modulation range, i.e. an increase of the converter output voltage. The most common harmonic added is a zero-sequence third harmonic having the opposite polarity or opposite sign in relation to the polarity or sign of the basic reference waveform. It is also possible to add higher odd harmonics that are multiples of three (and too are zero sequence). However the third harmonic has the highest influence.

For a standard two-level voltage-source converter, the converter basic reference waveform $u_v^{\mathrm{ref}}$, which is with advantage the output voltage reference, is for one of the three phases ideally given by (explicit phase notation is not used, for simplicity)

$$u_v^{\mathrm{ref}} = \hat{U}_v \cos\omega_1 t \qquad (1)$$

where $\omega_1$ is the fundamental angular frequency and $\hat{U}_v$ is the basic reference waveform amplitude or the output AC voltage amplitude, then the optimal third-harmonic addition is - in the sense that the peak value of the basic reference waveform is reduced as much as possible -

$$u_v^{\mathrm{ref}} = \hat{U}_v \left( \cos\omega_1 t - \frac{1}{6}\cos 3\omega_1 t \right) \qquad (2)$$

The dimensionless modulation reference r for a pulse-width modulator implemented by the control unit is then obtained by division by the direct voltage $u_d$, i.e., as $r = u_v^{\mathrm{ref}} / u_d$. That equation (2) is optimal for a two-level converter whose direct voltage is virtually constant can easily be shown and is well known in the art. However, for a cell based converter this is not necessarily the optimal addition, since the sum cell-voltage ripple must be compensated for in order not to get a distorted output voltage. This compensation is made by a more elaborate selection of the modulation reference. The modulation reference may instead be selected as:

$$r = \frac{u_v^{\mathrm{ref}} + \frac{1}{4}(u_{cp} - u_{cn})}{\frac{1}{4}(u_{cp} + u_{cn})} \qquad (3)$$

where $u_{cp}$ and $u_{cn}$ are the sum cell voltage for the positive and the negative arm, respectively. Both these sum cell voltages have a mean value $2u_d$, but superimposed ripples that are normally not negligible. This results in an asymmetry of the waveform of r and thereby an increased peak value if equation (2) is used, as can be seen in fig. 1. Clearly, this reduces the modulation range and consequently the maximum obtainable converter output voltage.

It is obvious that, to reduce the peak value as much as possible, the symmetry of the modulation reference must be restored. This restoration, by means of a modified third-harmonic addition, is the object of the invention.

To show that an improvement is obtainable through a modified third-harmonic addition, the proposed modulation-reference selection outlined in equation (2) is considered. Similar results are obtainable for other selections of the modulation reference.

If it is assumed that:

$$u_v^{\mathrm{ref}} = \hat{U}_v \left[ \cos x - k\cos(3x + \delta) \right] \qquad (4)$$

where $x = \omega_1 t$, k is the relative amplitude (in relation to the basic reference waveform amplitude) of the harmonic component and $\delta$ is an adjustment factor of the phase of the harmonic component in relation to the basic reference waveform phase. In the following the optimal values of k and $\delta$ are located, i.e. those which minimize the peak value through symmetrisation of the modulation reference.

Straightforward but tedious analysis shows that the difference and sum cell-voltage ripples are given by

$$u_{cp} - u_{cn} = A_1 \sin(x + \psi_1)$$
$$u_{cp} + u_{cn} = -A_2 \sin(2x + \psi_2) \tag{5}$$

Where

$$A_{1,2} = \frac{NS_{1,2}}{\omega_1 C_c u_d} \tag{6}$$

and

$$S_1 = \frac{\operatorname{sgn} P}{3\overline{m}} \sqrt{\left(1 - \frac{\overline{m}^2}{2}\right)^2 P^2 + Q^2} \qquad \psi_1 = -\arctan \frac{Q}{\left(1 - \frac{\overline{m}^2}{2}\right)P} \tag{7}$$

$$S_2 = \frac{\operatorname{sgn} P}{2} \sqrt{\left(\frac{P}{7}\right)^2 + \left(\frac{Q}{5}\right)^2} \qquad \psi_2 = -\arctan \frac{7Q}{5P}$$

In these equations, $N$ is furthermore the number of cells per phase arm of the converter, $C_c$ is the total capacitance in each cell, $u_d$ is the Pole-to-neutral direct voltage, i.e. the voltage between the first AC terminal and ground of the voltage source converter, $P$ is the total active output power, $Q$ is the total reactive output power and $\overline{m}$ is the modulation index.

The modulation index is furthermore defined as $\overline{m} = \hat{U}_v/u_d$.

Thus

$$r = \frac{\hat{U}_v[\cos x - k \cos(3x - \delta)] + \frac{A_1}{4}\sin(x + \psi_1)}{u_d - \frac{A_2}{4}\sin(2x + \psi_2)} \tag{8}$$

MacLaurin series expansion of the denominator of equation (8) yields

$$r = \frac{\hat{U}_v[\cos x - k \cos(3x - \delta)] + \frac{A_1}{4}\sin(x + \psi_1)}{u_d}\left[1 + \frac{A_2}{4u_d}\sin(2x + \psi_2)\right] \tag{9}$$

To facilitate the derivation of analytical formulas, it is necessary to assume $Q=0 \Rightarrow \psi_1 = \psi_2 = 0$, as otherwise extremely complicated equations would arise. So,

$$r = \frac{\hat{U}_v[\cos x - k \cos(3x - \delta)] + \frac{A_1}{4}\sin x}{u_d}\left(1 + \frac{A_2}{4u_d}\sin 2x\right) \tag{10}$$

Expansion of this expression shows that it contains components at 1, 3, and 5 times the fundamental frequency. The component at the fundamental frequency is given by

$$r_1 = \left(\frac{\hat{U}_v}{u_d} + \frac{A_1 A_2 + 4k\hat{U}_v A_2 \sin \delta}{32u_d^2}\right)\cos x + \frac{2A_1 u_d + (1 + k \cos \delta)A_2 \hat{U}_v}{8u_d^2}\sin x \tag{11}$$

It is easily verified that $A_{1,2} << \{\hat{U}_v, u_d\}$ normally, which allows terms proportional to $A_1 A_2$ to be neglected. Furthermore, it is reasonable to assume that the optimal value $\delta$ to be obtained will be small, so that $\cos\delta \approx 1$ and $\sin\delta \approx 0$. This results in

$$
\begin{aligned}
r_1 &\approx \frac{\hat{U}_v}{u_d}\cos x + \frac{2A_1 u_d + (1+k)A_2\hat{U}_v}{8u_d^2}\sin x \\
&= \frac{\hat{U}_v}{u_d}\left(\cos x + \frac{2A_1 u_d + (1+k)A_2\hat{U}_v}{8u_d\hat{U}_v}\sin x\right) \\
&\approx \frac{\hat{U}_v}{u_d}\cos\left(x - \frac{2A_1 u_d + (1+k)A_2\hat{U}_v}{8u_d\hat{U}_v}\right)
\end{aligned}
\tag{12}
$$

The component at three times the fundamental frequency is given by

$$
\begin{aligned}
r_3 &= -\frac{k\hat{U}_v}{u_d}\cos(3x+\delta) - \frac{A_1 A_2}{32u_d^2}\cos 3x + \frac{A_2\hat{U}_v}{8u_d^2}\sin 3x \\
&\approx -\frac{k\hat{U}_v}{u_d}\cos(3x+\delta) + \frac{A_2\hat{U}_v}{8u_d^2}\sin 3x \\
&= -\frac{k\hat{U}_v}{u_d}\left(\cos(3x+\delta) - \frac{A_2}{8ku_d}\sin 3x\right) \\
&\approx -\frac{k\hat{U}_v}{u_d}\cos\left(3x+\delta + \frac{A_2}{8ku_d}\right) = -\frac{k\hat{U}_v}{u_d}\cos 3\left(x + \frac{\delta}{3} + \frac{A_2}{24ku_d}\right)
\end{aligned}
\tag{13}
$$

where approximations similar to the approximations above have been made. Addition of the expressions for the two components results in

$$
r \approx \frac{\hat{U}_v}{u_d}\left[\cos\left(x - \frac{2A_1 u_d + (1+k)A_2\hat{U}_v}{8u_d\hat{U}_v}\right) - k\cos 3\left(x + \frac{\delta}{3} + \frac{A_2}{24ku_d}\right)\right].
\tag{14}
$$

A comparison of this relation to equation (4) reveals the following:

The amplitudes of the two components are identical in both equations. However, the phase shifts of the two components of equation (14) are different from those of equation (4).

From this it can be concluded that, if $\delta$ in equation (14) is selected such that the phase shifts of both components become equal, then the waveform of equation (14) becomes identical to that of equation (4) for $\delta$=0. Consequently, the relative harmonic amplitude $k$=1/6 is still the optimal choice, whereas the optimal phase adjustment $\delta$ can be found by equating the phase shifts, i.e.

$$
\begin{aligned}
&\frac{\delta}{3} + \frac{A_2}{24ku_d} = -\frac{2A_1 u_d + (1+k)A_2\hat{U}_v}{8u_d\hat{U}_v} \Rightarrow \\
&\delta = -3\frac{2A_1 u_d + (1+k)A_2\hat{U}_v}{8u_d\hat{U}_v} - \frac{A_2}{8ku_d} \\
&\quad = -\frac{3N}{8\omega_1 C_c u_d^2\hat{U}_v}\left[2S_1 u_d + (1+k)S_2\hat{U}_v\right] - \frac{NS_2}{8k\omega_1 C_c u_d^2}
\end{aligned}
\tag{15}
$$

Since $Q=0$ was assumed, $S_{1,2}$ are calculated for zero reactive power, giving

$$\begin{aligned}
\delta &= -\frac{3N}{8\omega_1 C_c u_d^2 \hat{U}_v}\left(2\frac{1-\overline{m}^2/2}{3\overline{m}}u_d + \frac{7}{6}\frac{1}{14}\hat{U}_v\right)P - \frac{3NP}{56\omega_1 C_c u_d^2} \\
&= -\frac{3N}{8\omega_1 C_c u_d \hat{U}_v}\left(2\frac{1-\overline{m}^2/2}{3\overline{m}} + \frac{\overline{m}^2}{12}\right)P - \frac{3\overline{m}^2 NP}{56\omega_1 C_c \hat{U}_v^2} \qquad (16) \\
&= -\frac{NP}{4\omega_1 C_c \hat{U}_v^2}\left(1 - \frac{9\overline{m}^2}{56}\right)
\end{aligned}$$

As can be seen from equation (16) the adjustment factor $\delta$ has a dependence on operational data of the converter in the form of number of cells N in a phase arm, cell capacitance $C_c$, basic reference waveform angular frequency $\omega_1$ and amplitude $\hat{U}_v$, modulation index $\overline{m}$ and above all power and here active output power P. It is here possible that the influence of the modulation index $\overline{m}$ is not considered, in which case the adjustment factor can be simplified as

$$\delta = -\frac{NP}{4\omega_1 C_c \hat{U}_v^2} \qquad (17)$$

This means that the adjustment factor $\delta$ is proportional to the output power P with a constant set by the other voltage source converter operational data. The constant is here based on the cell specifying data that defines a relationship between the number of cells in the converter, i.e. in the arms, and the cell capacitance as well as data specifying the basic reference waveform in the form of basic reference waveform angular frequency and amplitude.

The applying of such an adjustment factor will now be described with reference being made to fig. 2, 3, 5 and 6, where the latter shows a flow chart including a number of method steps in a method for controlling a cell based voltage source converter and being performed in the control device of the invention.

The method starts by the adjustment factor determining unit 14 obtaining the operational data of the voltage source converter 10, i.e. the measured value of the active output power P, the fundamental system constants, basic reference waveform angular frequency $\omega_1$, phase arm cell number N and cell capacitance $C_c$ as well as the internally generated signals modulation index $\overline{m}$ and basic reference waveform amplitude $\hat{U}_v$, As the basic reference waveform amplitude $\hat{U}_v$ can be measured as the amplitude of the output AC voltage amplitude, it may alternatively be considered as a measured value. Based on this operational data, the adjustment factor determining unit 14 determines the adjustment factor $\delta$, step 20. It may here apply equation (16) but also equation (17). The determined adjustment factor $\delta$ is then supplied to the low pass filter 16, which low pass filters the adjustment factor, step 22, in order to obtain a low pass filtered adjustment factor $\delta_F$, which is then delivered to the control unit 18. The control unit 18 then provides the basic reference waveform, step 24, in a way known as such. Thereafter the control unit 18 determines the third harmonic component based on the basic reference waveform angular frequency $N_1$ and amplitude $\hat{U}_v$ and relative harmonic amplitude k, which relative harmonic amplitude k may be set to 1/6, step 26. The harmonic component here has the opposite polarity in relation to the polarity of the basic reference waveform, i.e. it has the opposite sign in relation to the basic reference waveform. Thereafter the phase of the third harmonic component is phase shifted with the adjustment factor $\delta_F$. The phase shifted third harmonic component is then added to the basic reference waveform to form an actual reference waveform, step 28, where this actual reference waveform is provided according to equation (4) above. The control unit 18 then generates a control signal CTRL using PWM, which control signal CTRL is used to control the voltage source converter, step 30. The control signal CTRL more particularly causes the cells of the voltage source converter 10 to reproduce the actual reference waveform on the AC terminals, i.e. the waveform of the basic reference with phase adjusted added third harmonics. The cells are here each controlled to provide a voltage contribution, where the sum of the voltage contributions over time provides the waveform.

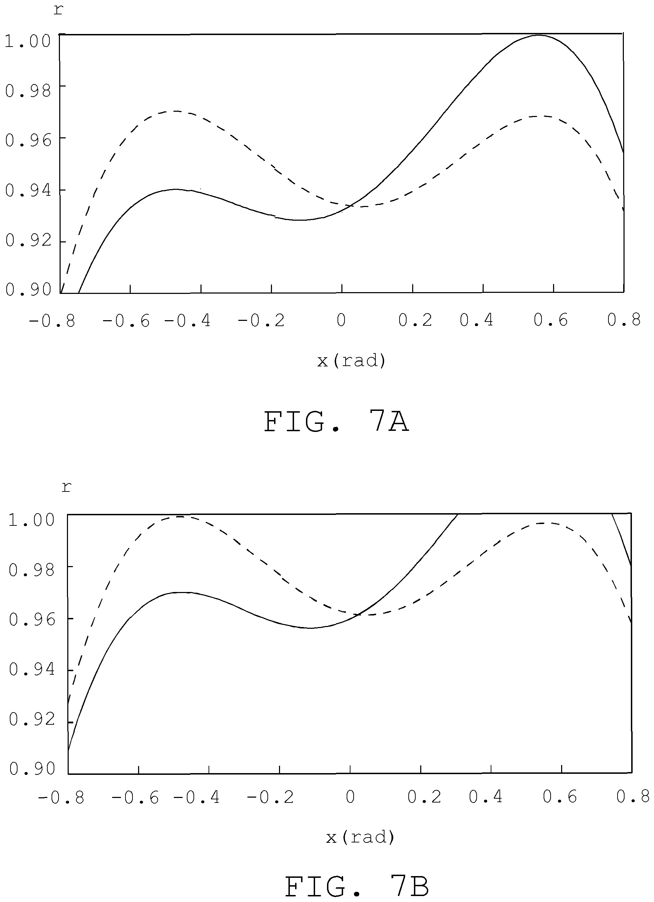

In this way an improved efficiency may be obtained. This is exemplified by fig 7A and 7B. Fig. 7A shows the relationship between modulation reference r and reference waveform angle in radians for the cell based voltage source converter with $u_d$=150 kV and a rated power of 350 MVA. Here there is a resistive load of $P$=300 MW and a reactive load $Q=0$ at a maximum AC voltage of 205 kV with no phase adjustment (solid curve) and with a phase adjustment $\delta$ set according to equation (14) (dashed curve). Fig. 7B shows the same relationships but for a maximum AC voltage of 212 kV. From fig. 7A it can be seen that that for $\delta$=0, i.e., the standard third-harmonic addition, the maximum obtainable voltage is 205 kV, as the solid curve then has a peak value of 1. Using the obtained selection (14), the peak is reduced to 0.97, as the dashed curve shows. This allows a voltage increase to 212 kV - an increase of 7 kV - because for this voltage the peak of the dashed curve touches 1, as shown in fig. 7B.

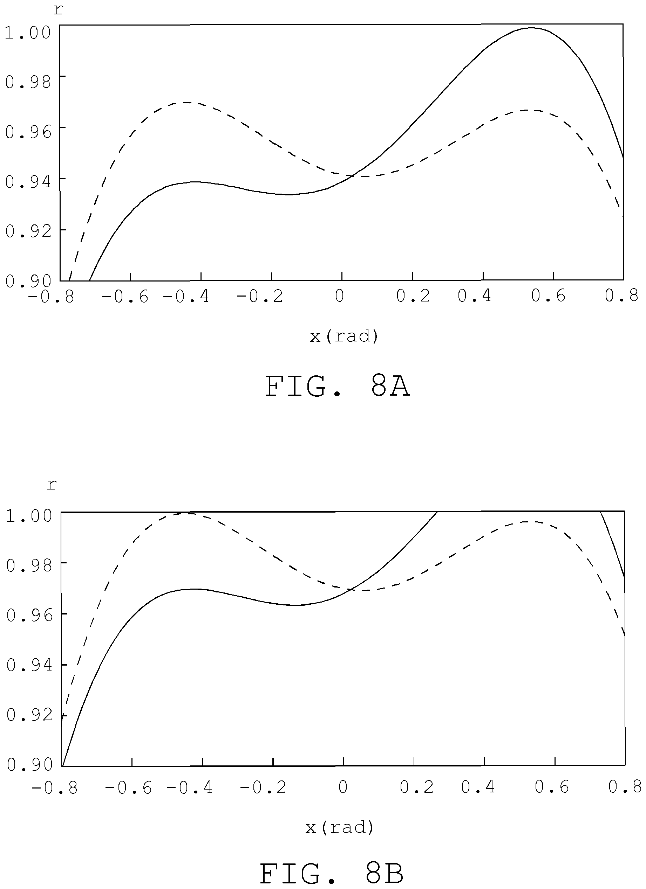

The example in fig. 7A and 7B had a pure resistive load, i.e. Q = 0. In case a reactive load is introduced, similar results are obtained as can be seen in fig. 8A and 8B showing the relationship between modulation reference r and reference waveform angle for the cell based voltage source converter with $u_d$=150 kV and a rated power of 350 MVA. Here the load is $P$=300 MW and $Q$=100 MVAr at a maximum AC voltage of 199 kV with adjustment factor zero and set according to equation (14) and 206 kV with adjustment factor zero and set according to equation (14), respectively. As can be seen similar results are obtained also here with an obtainable voltage increase of 7 kV.

Through the present invention there is therefore provided a modulation reference that is more symmetrical for a cell based voltage source converter. This improves the modulation range and allows a raising of the AC output voltage and thus a more efficient use of the voltage source converter.

The description was above made in relation to a multi-level voltage source converter. This converter may be varied in a number of ways. It is for instance possible to move the inductors that are placed between the cells of an arm and a DC terminal, so that they instead are connected to the AC terminal or rather so that each such phase arm inductor interconnect the cells of the arm with the inductor provided in the connection to the AC terminal. It is here also possible that these inductances of the positive and negative arms of a phase leg be provided with a centre terminal. These two centre terminals may then be connected to each other via a capacitor in order to form a filter.

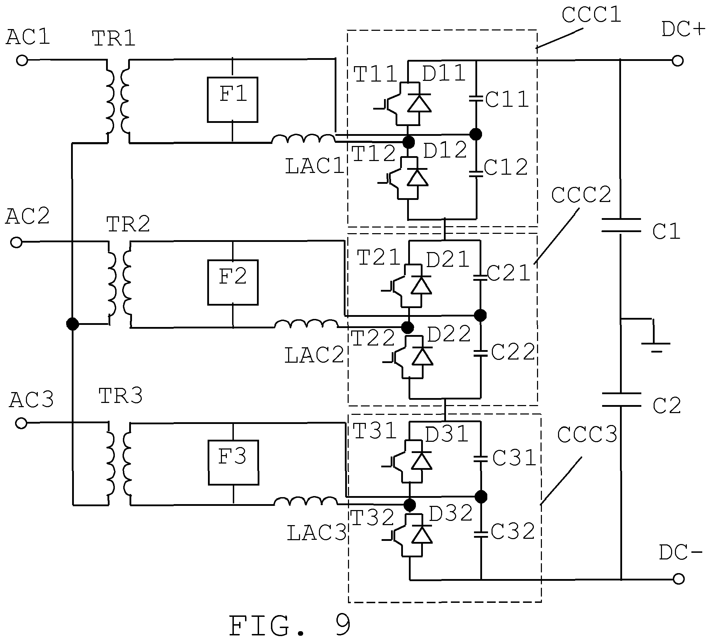

The invention is in fact not limited to multilevel voltage source converters. A second type of cell based voltage source converter where the invention may also be implemented is schematically shown in fig. 9.

The voltage source converter in fig. 9 includes only one branch of cells connected between the two DC terminals DC+ and DC-. In parallel with this branch two capacitors C1 and C2 are connected, where the mid-point between theses capacitors is grounded. In this converter the cells are of a third type CCC. In this third type there are two series connected switching units in parallel with energy storage elements in the form of capacitors in the same way as in the cells of the first and second types. However there are here two capacitors in each cell. One of the connection terminals of this type of cell is provided between the two switching units as in the first and second types of cells. However the other connection terminal is here provided at the connection point between the two capacitors.

This means that in the sole branch there is a first cell CCC1 with a first switching unit in the form of a first transistor diode pair T11 and D11 followed by a second switching unit in the form of a second transistor diode pair T12 and D12 in parallel with two series connected capacitors C11 and C12. Here the connection point between the two switching units is connected to a first end of a secondary winding of a first transformer TR1 via a first inductor LAC1, while the connection point between the two capacitors C11 and C12 is connected to a second end of the secondary winding of the first transformer TR1. There is here furthermore a first AC filter F1 connected between the two ends of this secondary winding. The first transformer TR1 has a primary winding, where a first AC terminal AC1 of the converter is provided at a first end of this primary winding.

In the same manner, the first cell is in the branch followed by a second cell CCC2 with a first switching unit in the form of a first transistor diode pair T21 and D21 followed by a second switching unit in the form of a second transistor diode pair T22 and D22 in parallel with two series connected capacitors C21 and C22. The connection point between the two switching units is connected to a first end of a secondary winding of a second transformer TR2 via a second inductor LAC2, while the connection point between the two capacitors C21 and C22 is connected to a second end of the secondary winding of the second transformer TR2. There is here also a second AC filter F2 connected between the two ends of this secondary winding. The second transformer TR2 has a primary winding, where a second AC terminal AC2 of the converter is provided at a first end of this primary winding.

Finally there is a third cell CCC3 in the branch having a first switching unit in the form of a first transistor diode pair T31 and D31 followed by a second switching unit in the form of a second transistor diode pair T32 and D32 in parallel with two series connected capacitors C31 and C32. The connection point between the two switching units is connected to a first end of a secondary winding of a third transformer TR3 via a third inductor LAC3, while the connection point between the two capacitors C31 and C32 is connected to a second end of the secondary winding of the third transformer TR3. There is also here a third AC filter F3 connected between the two ends of this secondary winding. The third transformer TR3 has a primary winding, where a third AC terminal AC3 of the converter is provided at a first end of this primary winding.

Finally the second ends of the primary windings of all three transformers TR1, TR2 and TR3 are connected to each other through forming Y-connections in order to be connected to a three-phase AC system via the AC terminals AC1, AC2 and AC3.

In this type of converter, the first cell is used for conversion in relation to a first AC phase, the second cell is used for conversion in relation to a second AC phase, while the third cell is used for conversion in relation to a third AC phase. It is here possible to determine a similar expression for this type of converter as for the first type of converter in order to determine adjustment factor. The factor may also here be determined based on power, like active and/or reactive power, modulation index and the basic reference waveform amplitude and frequency. There is also a relationship to cell capacitance, which cell capacitance in this case is made up of the capacitance of both the capacitors of the cell. However, since only one cell is used for each cell, the number of cells in the converter, i.e. in a branch does not affect the determination of adjustment factor.

The voltage source converter shown in fig. 9 may be varied in a number of ways. The primary windings of the transformers may be interconnected using a $\Delta$-connection. It is also possible to remove the AC filters. Another variation that is possible in relation to the topology disclosed in fig. 9 is to provide each cell with a third and a fourth series-connected switching unit in parallel with the series-connected first and second switching units and a single capacitor. The connection point between the first and second switching units is then, just as in fig. 9, connected to a first end of a secondary winding of a transformer via an inductor. However, here the connection point between the third and the fourth series-connected switching units is connected to a second end of the secondary winding of the transformer via another inductor.

It is furthermore possible to double the number of cells in the branch combined with grounding the midpoint of the branch. The cells in the upper half of the branch are then connected to the secondary windings of a first, second and third transformer in the same way as the whole branch according to fig. 9 or the above mentioned variation, while the cells of the lower half of the branch are connected to a secondary winding of a fourth, fifth and sixth transformer in the same way as the cells of the branch in fig. 9 or the above mentioned variation. The primary windings of the first, second and third transformers are interconnected and connected to AC terminals of a three phase AC system in the same way as the transformers in fig. 9. Also the primary windings of the fourth, fifth and sixth transformers are interconnected and connected to AC terminals of a three-phase AC system in the same way as the primary windings of the transformer in fig. 9. In the various variations of this converter it is possible to include or omit AC filters as well as also interconnect the transformers with either Y- or $\Delta$-connections. It is also possible to determine an expression for the converter that is similar to the expression used for the first type of converter in order to determine adjustment factor. Here

There are a number of further variations that can be made in relation to the present invention. The relative amplitude of the addition may be 1/6. It should however be realized that it may be varied. It may be as low as 1/8. The odd harmonics was above exemplified by a third harmonic component. However the principles of the present invention can also be used for adding other odd harmonics with a multiple of three, for instance ninth harmonic. The low pass filter of the control device is not always necessary, and may be omitted. The adjustment factor can alternatively be determined based on a combination of active and reactive power or solely based on reactive power. The adjustment factor can furthermore be determined using an on-line numerical search analysis based on a system model of the voltage source converter, the cells and the cell ripple.

The control device need not be provided as a part of a voltage source converter. It can be provided as a separate entity that provides control signals to the voltage source converter. This control device may furthermore be realized in the form of a processor with accompanying program memory comprising computer program code that performs the desired control functionality when being run on the processor. This computer program product can be provided as a data carrier such as one or more CD ROM discs or one or more memory sticks carrying computer program code, which performs the above-described adding of odd harmonics when being loaded into a control device of or for a voltage source converter.

From the foregoing discussion it is evident that the present invention can be varied in a multitude of ways. It shall consequently be realized that the present invention is only to be limited by the following claims.

**Claims**

1. A method for controlling a cell based voltage source converter (10) using a basic reference waveform to which at least one odd harmonic component has been added, **characterised by** the steps of:

   - determining (20) an adjustment factor ($\delta$) for at least one harmonic component to be added to said basic reference waveform based on operational data of the voltage source converter,
   - determining (26) said at least one odd harmonic component,
   - adding (28) said odd harmonic component to the basic reference waveform shifted in phase with said adjustment factor, and
   - controlling (30) the voltage source converter using the basic reference waveform with added harmonic component.

2. A method according to claim 1, wherein the operational data includes the output power from the voltage source converter.

**3.** A method according to claim 2, wherein the output power includes the active output power (P).

**4.** A method according to claim 2 or 3, wherein the output power includes the reactive output power (Q).

**5.** A method according to any of claims 2 - 4, wherein the adjustment factor is proportional to the output power with a constant set by other voltage source converter operational data.

**6.** A method according to claim 5, wherein said other voltage source converter operational data includes cell specifying data.

**7.** A method according to claim 6, wherein the voltage source converter includes at least one branch of series connected cells, where each cell has a cell capacitance used in conversion between AC and DC, said cell specifying data used for obtaining said constant including said cell capacitance and the number of cells in the branch used for conversion between DC and one AC phase.

**8.** A method according to claim 7, wherein there are at least two branches (PL1, PL2, PL3), each provided with a positive and a negative arm, which each includes a number (N) of converter cells, and the cell specifying data used for obtaining said constant includes this number of cells and the cell capacitance of these cells.

**9.** A method according to claim 7, wherein there is one branch with three cells, each cell being connected to a respective AC phase.

**10.** A method according to any of claims 5 - 9, wherein said other voltage source converter operational data includes a modulation index ($\overline{m}$).

**11.** A method according to any of claims 5 - 10, wherein said other voltage source converter operational data includes data specifying the basic reference waveform.

**12.** A method according to claim 11, wherein said data specifying the basic reference waveform includes the amplitude ($\hat{U}_v$) of the basic reference waveform.

**13.** A method according to any previous claim, wherein the step of determining said at least one odd harmonic component comprises providing said odd harmonic component with the opposite polarity in relation to the polarity of the basic reference waveform.

**14.** A method according to any previous claim, wherein the step of determining said at least one odd harmonic component compromises providing said harmonic component with an amplitude that is a fraction (k) of 1/6 or less of the amplitude of the basic reference waveform.

**15.** A control device (12) for controlling a cell based voltage source converter (10) using a basic reference waveform to which at least one odd harmonic component has been added, said control device
**characterised by**
an adjustment factor determining unit (14) configured to determine an adjustment factor ($\delta$) for at least one harmonic component to be added to said basic reference waveform based on operational data of the voltage source converter, and
a control unit (18) configured to determine said at least one odd harmonic component, add said odd harmonic component to the basic reference waveform shifted in phase with said adjustment factor and control (CTRL) the voltage source converter using the basic reference waveform with added harmonic component.

**16.** Control device according to claim 15, wherein the control unit when being configured to determine said at least one odd harmonic component is configured to provide said odd harmonic component with the opposite polarity in relation to the polarity of the basic reference waveform.

**17.** Control device according to claim 15 or 16, wherein the control unit when being configured to determine said at least one odd harmonic component is configured to provide said harmonic component with an amplitude that is a fraction (k) of 1/6 or less of the amplitude of the basic reference waveform.

**18.** A voltage source converter (12) comprising:

- at least one branch (PL1, PL2, PL3) of series connected cells, where each cell has a cell capacitance used in conversion between AC and DC, branches, where each branch includes a number of series connected voltage source converter cells (CA1, CA2, CA3, CA4, CA5, CA6, CB1, CB2, CB3, CB4, CB5, CB6, CC1, CC2, CC3, CC4, CC5, CC6), each having at least one switching unit (SU1, SU2) in parallel with at least one energy storage element (C) providing a cell capacitance used in conversion between AC and DC, **characterised by**
- a control device (12) according to any of claims 15-17.

19. A computer program product for controlling a cell based voltage source converter (10) using a basic reference waveform to which at least one odd harmonic component has been added,

the computer program being loadable into a control device (12) of or for the voltage source converter and comprising computer program code means to make the control device, when said program is loaded in said control device,

- determine an adjustment factor ($\delta$) for at least one harmonic component to be added to said basic reference waveform based on operational data of the voltage source converter,
- determine said at least one odd harmonic component,
- add said odd harmonic component to the basic reference waveform shifted in phase with said adjustment factor, and
- control the voltage source converter using the basic reference waveform with added harmonic component.

**Patentansprüche**

1. Verfahren zum Steuern eines auf Zellen basierenden Spannungsquellenumsetzers (10) unter Verwendung einer Referenzgrundwellenform, zu der mindestens eine ungeradzahlige Oberwellenkomponente addiert wurde, **gekennzeichnet durch** die folgenden Schritte:

- Bestimmen (20) eines Einstellungsfaktors ($\delta$) für mindestens eine Oberwellenkomponente, die zu der Referenzgrundwellenform addiert werden soll, auf der Basis von Betriebsdaten des Spannungsquellenumsetzers,
- Bestimmen (26) der mindestens einen ungeradzahligen Oberwellenkomponente,
- Addieren (28) der ungeradzahligen Oberwellenkomponente um dem Einstellungsfaktor phasenverschoben zur Referenzgrundwellenform, und
- Steuern (30) des Spannungsquellenumsetzers unter Verwendung der Referenzgrundwellenform mit der addierten Oberwellenkomponente.

2. Verfahren nach Anspruch 1, wobei die Betriebsdaten die Ausgangsleistung des Spannungsquellenumsetzers enthalten.

3. Verfahren nach Anspruch 2, wobei die Ausgangsleistung die aktive Ausgangsleistung (P) enthält.

4. Verfahren nach Anspruch 2 oder 3, wobei die Ausgangsleistung die reaktive Ausgangsleistung (Q) enthält.

5. Verfahren nach einem der Ansprüche 2-4, wobei der Einstellungsfaktor um eine Konstante, die durch andere Betriebsdaten des Spannungsquellenumsetzers eingestellt wird, zur Ausgangsleistung proportional ist.

6. Verfahren nach Anspruch 5, wobei die anderen Betriebsdaten des Spannungsquellenumsetzers Zellen spezifizierende Daten enthalten.

7. Verfahren nach Anspruch 6, wobei der Spannungsquellenumsetzer mindestens einen Zweig von in Reihe geschalteten Zellen enthält, wobei jede Zelle eine Zellenkapazität aufweist, die bei der Umsetzung zwischen Wechselstrom und Gleichstrom verwendet wird, wobei die Zellen spezifizierenden Daten, die zum Ermitteln der Konstante verwendet werden, die Zellenkapazität und die Anzahl der Zellen in dem Zweig, der zur Umsetzung zwischen einem Gleichstrom und einer Wechselstromphase verwendet wird, enthalten.

8. Verfahren nach Anspruch 7, wobei es mindestens zwei Zweige (PL1, PL2, PL3) gibt, die jeweils mit einem positiven und einem negativen Arm versehen sind, die jeweils eine Anzahl (N) von Umsetzerzellen enthalten, und die Zellen spezifizierenden Daten, die zum Ermitteln der Konstante verwendet werden, diese Anzahl der Zellen und die Zellenkapazität dieser Zellen enthalten.

9. Verfahren nach Anspruch 7, wobei es einen Zweig mit drei Zellen gibt, wobei jede Zelle mit einer jeweiligen Wechselstromphase verbunden ist.

10. Verfahren nach einem der Ansprüche 5-9, wobei die anderen Betriebsdaten des Spannungsquellenumsetzers einen Modulationsindex ($\overline{m}$) enthalten.

11. Verfahren nach einem der Ansprüche 5-10, wobei die anderen Betriebsdaten des Spannungsquellenumsetzers Daten enthalten, die die Referenzgrundwellenform spezifizieren.

12. Verfahren nach Anspruch 11, wobei die Daten, die die Referenzgrundwellenform spezifizieren, die Amplitude ($\hat{U}_v$) der Referenzgrundwellenform enthalten.

13. Verfahren nach einem der vorhergehenden Ansprüche, wobei der Schritt des Bestimmens der mindestens einen ungeradzahligen Oberwellenkomponente das Versehen der ungeradzahligen Oberwellenkomponente mit der in Bezug auf die Polarität der Referenzgrundwellenform entgegengesetzten Polarität umfasst.

14. Verfahren nach einem der vorhergehenden Ansprüche, wobei der Schritt des Bestimmens der mindestens einen ungeradzahligen Oberwellenkomponente das Versehen der Oberwellenkomponente mit einer Amplitude, die ein Bruchteil (k) von 1/6 oder weniger der Amplitude der Referenzgrundwellenform ist, umfasst.

15. Steuervorrichtung (12) zum Steuern eines auf Zellen basierenden Spannungsquellenumsetzers (10) unter Verwendung einer Referenzgrundwellenform, zu der mindestens eine ungeradzahlige Oberwellenkomponente addiert wurde, wobei die Steuervorrichtung **gekennzeichnet ist durch**
eine Einheit (14) zum Bestimmen eines Einstellungsfaktors, die konfiguriert ist, für mindesten eine Oberwellenkomponente, die zu der Referenzgrundwellenform addiert werden soll, auf der Basis von Betriebsdaten des Spannungsquellenumsetzers einen Einstellungsfaktor ($\delta$) zu bestimmen, und
eine Steuereinheit (18), die konfiguriert ist, die mindestens eine ungeradzahlige Oberwellenkomponente zu bestimmen, die ungeradzahlige Oberwellenkomponente um den Einstellungsfaktor phasenverschoben zur Referenzgrundwellenform zu addieren und den Spannungsquellenumsetzer unter Verwendung der Referenzgrundwellenform mit der addierten Oberwellenkomponente zu steuern (CTRL).

16. Steuervorrichtung nach Anspruch 15, wobei die Steuereinheit dann, wenn sie konfiguriert ist, die mindestens eine ungeradzahlige Oberwellenkomponente zu bestimmen, konfiguriert ist, die ungeradzahlige Oberwellenkomponente mit der in Bezug auf die Polarität der Referenzgrundwellenform entgegengesetzten Polarität zu versehen.

17. Steuervorrichtung nach Anspruch 15 oder 16, wobei die Steuereinheit dann, wenn sie konfiguriert ist, die mindestens eine ungeradzahlige Oberwellenkomponente zu bestimmen, konfiguriert ist, die ungeradzahlige Oberwellenkomponente mit einer Amplitude zu versehen, die ein Bruchteil (k) von 1/6 oder weniger der Amplitude der Referenzgrundwellenform ist.

18. Spannungsquellenumsetzer (12), der Folgendes umfasst:

- mindestens einen Zweig (PL1, PL2, PL3) von in Reihe geschalteten Zellen, wobei jede Zelle einen Zellenkapazität aufweist, die bei der Umsetzung zwischen Wechselstrom und Gleichstrom verwendet wird, Zweige, wobei jeder Zweig eine Anzahl von in Reihe geschalteten Spannungsquellenumsetzerzellen (CA1, CA2, CA3, CA4, CA5, CA6, CB1, CB2, CB3, CB4, CB5, CB6, CC1, CC2, CC3, CC4, CC5, CC6) enthält, die jeweils mindestens eine Schalteinheit (SU1, SU2) parallel zu mindestens einem Energiespeicherelement (C) aufweisen, wobei eine Zellenkapazität bereitgestellt wird, die bei der Umsetzung zwischen Wechselstrom und Gleichstrom verwendet wird, **gekennzeichnet durch**
- eine Steuervorrichtung (12) nach einem der Ansprüche 15-17.

19. Computerprogrammprodukt zum Steuern eines auf Zellen basierenden Spannungsquellenumsetzers (10) unter Verwendung einer Referenzgrundwellenform, zu der mindestens eine ungeradzahlige Oberwellenkomponente addiert wurde,
wobei das Computerprogramm in eine Steuervorrichtung (12) des Spannungsquellenumsetzers oder für den Spannungsquellenumsetzer geladen werden kann und Computerprogrammcodemittel umfasst, um zu bewirken, dass die Steuervorrichtung dann, wenn das Programm in die Steuervorrichtung geladen wird,

- auf der Basis von Betriebsdaten des Spannungsquellenumsetzers einen Einstellungsfaktor ($\delta$) für mindestens eine Oberwellenkomponente, die zu der Referenzgrundwellenform addiert werden soll, bestimmt,
- die mindestens eine ungeradzahlige Oberwellenkomponente bestimmt,
- die ungeradzahlige Oberwellenkomponente um den Einstellungsfaktor phasenverschoben zu der Referenzgrundwellenform addiert, und
- den Spannungsquellenumsetzer unter Verwendung der Referenzgrundwellenform mit der addierten Oberwellenkomponente steuert.

**Revendications**

1. Procédé destiné à contrôler un convertisseur de source de tension à base de cellules (10) en utilisant une forme d'onde basique de référence à laquelle au moins une composante harmonique impaire a été ajoutée, **caractérisé par** les étapes consistant à :

   - déterminer (20) un facteur d'ajustement ($\delta$) pour au moins une composante harmonique devant être ajoutée à ladite forme d'onde basique de référence sur la base de données opérationnelles du convertisseur de source de tension,
   - déterminer (26) ladite au moins une composante harmonique impaire,
   - ajouter (28) ladite composante harmonique impaire à la forme d'onde basique de référence déphasée avec ledit facteur d'ajustement, et
   - contrôler (30) le convertisseur de source de tension en utilisant la forme d'onde basique de référence avec composante harmonique ajoutée.

2. Procédé selon la revendication 1, dans lequel les données opérationnelles comportent la puissance de sortie du convertisseur de source de tension.

3. Procédé selon la revendication 2, dans lequel la puissance de sortie comporte la puissance de sortie active (P).

4. Procédé selon la revendication 2 ou 3, dans lequel la puissance de sortie comporte la puissance de sortie réactive (Q).

5. Procédé selon l'une quelconque des revendications 2 à 4, dans lequel le facteur d'ajustement est proportionnel à la puissance de sortie avec une constante définie par d'autres données opérationnelles de convertisseur de source de tension.

6. Procédé selon la revendication 5, dans lequel lesdites autres données opérationnelles de convertisseur de source de tension comportent des données de spécification de cellules.

7. Procédé selon la revendication 6, dans lequel le convertisseur de source de tension comporte au moins une branche de cellules branchées en série, où chaque cellule a une capacité cellulaire utilisée dans la conversion entre CA et CC, lesdites données de spécification de cellules utilisées pour obtenir ladite constante comportant ladite capacité cellulaire et le nombre de cellules dans la branche utilisée pour la conversion entre CC et une phase CA.

8. Procédé selon la revendication 7, dans lequel il y a au moins deux branches (PL1, PL2, PL3), chacune pourvue d'un bras positif et d'un bras négatif, qui comportent chacun un nombre (N) de cellules de convertisseur, et les données de spécification de cellules utilisées pour obtenir ladite constante comportent ce nombre de cellules et la capacité cellulaire de ces cellules.

9. Procédé selon la revendication 7, dans lequel il y a une branche avec trois cellules, chaque cellule étant branchée à une phase CA respective.

10. Procédé selon l'une quelconque des revendications 5 à 9, dans lequel lesdites autres données opérationnelles de convertisseur de source de tension comportent un indice de modulation ($\overline{m}$).

11. Procédé selon l'une quelconque des revendications 5 à 10, dans lequel lesdites autres données opérationnelles de convertisseur de source de tension comportent des données spécifiant la forme d'onde basique de référence.

12. Procédé selon la revendication 11, dans lequel lesdites données spécifiant la forme d'onde basique de référence

comportent l'amplitude ($\hat{U}_v$) de la forme d'onde basique de référence.

13. Procédé selon une quelconque revendication précédente, dans lequel l'étape consistant à déterminer ladite au moins une composante harmonique impaire comprend l'étape consistant à doter ladite composante harmonique impaire de la polarité opposée par rapport à la polarité de la forme d'onde basique de référence.

14. Procédé selon une quelconque revendication précédente, dans lequel l'étape consistant à déterminer ladite au moins une composante harmonique impaire comprend l'étape consistant à doter ladite composante harmonique d'une amplitude qui est une fraction (k) de 1/6 ou moins de l'amplitude de la forme d'onde basique de référence.

15. Dispositif de contrôle (12) destiné à contrôler un convertisseur de source de tension à base de cellules (10) en utilisant une forme d'onde basique de référence à laquelle au moins une composante harmonique impaire a été ajoutée, ledit dispositif de contrôle étant **caractérisé par**
une unité de détermination de facteur d'ajustement (14) configurée pour déterminer un facteur d'ajustement ($\delta$) pour au moins une composante harmonique devant être ajoutée à ladite forme d'onde basique de référence sur la base de données opérationnelles du convertisseur de source de tension, et
une unité de contrôle (18) configurée pour déterminer ladite au moins une composante harmonique impaire, ajouter ladite composante harmonique impaire à la forme d'onde basique de référence déphasée avec ledit facteur d'ajustement et contrôler (CTRL) le convertisseur de source de tension en utilisant la forme d'onde basique de référence avec composante harmonique ajoutée.

16. Dispositif de contrôle selon la revendication 15, dans lequel l'unité de contrôle, quand elle est configurée pour déterminer ladite au moins une composante harmonique impaire, est configurée pour doter ladite composante harmonique impaire de la polarité opposée par rapport à la polarité de la forme d'onde basique de référence.

17. Dispositif de contrôle selon la revendication 15 ou 16, dans lequel l'unité de contrôle, quand elle est configurée pour déterminer ladite au moins une composante harmonique impaire, est configurée pour doter ladite composante harmonique d'une amplitude qui est une fraction (k) de 1/6 ou moins de l'amplitude de la forme d'onde basique de référence.

18. Convertisseur de source de tension (12) comprenant :

- au moins une branche (PL1, PL2, PL3) de cellules branchées en série, où chaque cellule a une capacité cellulaire utilisée dans la conversion entre CA et CC, branches, où chaque branche comporte un nombre de cellules de convertisseur de source de tension branchées en série (CA1, CA2, CA3, CA4, CA5, CA6, CB1, CB2, CB3, CB4, CB5, CB6, CC1, CC2, CC3, CC4, CC5, CC6), chacune ayant au moins une unité de commutation (SU1, SU2) en parallèle avec au moins un élément de stockage d'énergie (C) fournissant une capacité cellulaire utilisée dans la conversion entre CA et CC, **caractérisé par**
- un dispositif de contrôle (12) selon l'une quelconque des revendications 15 à 17.

19. Produit-programme informatique destiné à contrôler un convertisseur de source de tension à base de cellules (10) en utilisant une forme d'onde basique de référence à laquelle au moins une composante harmonique impaire a été ajoutée,
le programme informatique étant chargeable dans un dispositif de contrôle (12) du ou pour le convertisseur de source de tension et comprenant un moyen de code de programme informatique pour amener le dispositif de contrôle, quand ledit programme est chargé dans ledit dispositif de contrôle, à

- déterminer un facteur d'ajustement ($\delta$) pour au moins une composante harmonique devant être ajoutée à ladite forme d'onde basique de référence sur la base de données opérationnelles du convertisseur de source de tension,
- déterminer ladite au moins une composante harmonique impaire,
- ajouter ladite composante harmonique impaire à la forme d'onde basique de référence déphasée avec ledit facteur d'ajustement, et
- contrôler le convertisseur de source de tension en utilisant la forme d'onde basique de référence avec composante harmonique ajoutée.

FIG. 1

FIG. 2

TE1A

D1 T1 SU1 CCA

C

D2 T2 SU2

TE2A

FIG. 3

TE1B

D1 T1 SU1 CCB

C

D2 T2 SU2

TE2B

FIG. 4

FIG. 5

FIG. 6

FIG. 7A

FIG. 7B

FIG. 8A

FIG. 8B

EP 2 478 632 B1

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 10103031
- JP 2008193770 B
- WO 0103490 A
- US 6058031 A
- US 20060279249 A

**Non-patent literature cited in the description**

- **STEFFEN ROHNER et al.** *Pulse width modulation scheme for the Modular Multilevel Converter,* ISBN 978-1-4244-4432-8